(19)

**Europäisches Patentamt**
**European Patent Office**
**Office européen des brevets**

(11) **EP 4 654 060 A1**

(12) **EUROPEAN PATENT APPLICATION**

(43) Date of publication:
**26.11.2025 Bulletin 2025/48**

(21) Application number: **25175577.3**

(22) Date of filing: **12.05.2025**

(51) International Patent Classification (IPC):
**G06F 21/62** $^{(2013.01)}$     **G06N 3/045** $^{(2023.01)}$
**G06N 3/08** $^{(2023.01)}$

(52) Cooperative Patent Classification (CPC):
**G06F 21/6245; G06N 3/045; G06N 3/0464;**
**G06N 3/063; G06N 3/08; G06N 3/084; G06N 3/09;**
**G06N 20/00**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **20.05.2024 FI 20245635**

(71) Applicant: **Nokia Solutions and Networks Oy**
**02610 Espoo (FI)**

(72) Inventors:
• **KOSKELA, Antti Herman**
  **Helsinki (FI)**
• **MOHAMMADI, Jafar**
  **Munich (DE)**

(74) Representative: **Nokia EPO representatives**
**Nokia Technologies Oy**
**Karakaari 7**
**02610 Espoo (FI)**

(54) **PRIVACY AUDIT OF A NEURAL NETWORK**

(57)     Selecting, at random, test data from a test dataset and training data from a training dataset to obtain an input dataset;
inputting the input data into a neural network;
determining, for each of the input data, a value of a score function, wherein the score function is an arbitrary loss function;
sorting the values of the score function into plural bins;
for each of the bins:
calculating a proportion of the training data among the input data for which the values of the score function fall in the respective bin;
calculating a proportion of the test data among the input data for which the values of the score function fall in the respective;
subtracting the proportion of the test data from the proportion of the training data to obtain a distance for the respective bin;

calculating a total distance by summing the distances for the bins being larger than 0.

Fig. 2

**Description**

Technical Field

The present disclosure relates to auditing privacy preserved by a neural network.

Abbreviations

| | |
|---|---|
| 3GPP | $3^{rd}$ Generation Partnership Project |
| 4G/5G/6G | $4^{th}/5^{th}/6^{th}$ Generation |
| ADRF | Analytics Data Repository Function |
| AF | Application Function |
| AI | Artificial Intelligence |
| DP | Differential Privacy |
| DP-SGD | DP - Stochastic Gradient Descent |
| eNB | Evolved Node B |
| FL | Federated Learning |
| GD | Gradient Descent |
| gNB | 5G base station |
| ML | Machine Learning |
| NF | Network Function |
| NN | Neural Network |
| NWDAF | Network Data Analytics Function |
| PANF | Privacy Auditing Network Function |
| PET | Privacy Enhancing Technology |
| TV | Total Variation |
| UE | User Equipment |

Background

Differential privacy (DP) is an approach for providing privacy while sharing information about a group of individuals, by describing the patterns within the group while withholding information about specific individuals. This is done by making random small changes to individual data that do not (or hardly) change the statistics of interest. Thus, the data cannot be used to infer much about any individual. Another way to describe differential privacy is as a constraint on the algorithms used to publish aggregate information about a statistical database which limits the disclosure of private information of records in the database. Roughly, an algorithm is differentially private if an observer seeing its output cannot tell whether a particular individual's information was used in the computation.

The concept of $\varepsilon$-differential privacy provides a mathematical definition for the privacy loss associated with any data release drawn from a statistical database. Here, the term statistical database means a set of data that are collected under the pledge of confidentiality for the purpose of producing statistics that, by their production, do not compromise the privacy of those individuals who provided the data.

The intuition for a definition of $\varepsilon$-differential privacy is that a person's privacy cannot be compromised by a statistical release if their data are not in the database. Therefore, with differential privacy, the goal is to give each individual roughly the same privacy that would result from having their data removed. That is, the statistical functions run on the database should not overly depend on the data of any one individual.

The level of privacy $\varepsilon$-differential privacy is defined by the value of $\varepsilon$. The larger the value of $\varepsilon$ is, the higher is the risk that privacy may be violated. In some cases, there is a second parameter $\delta$ such that the pair $(\varepsilon, \delta)$ defines the level of privacy. However, $\delta$ is usually very small (e.g. $10^{-5}$) and may be neglected for the purpose of the present application. Nevertheless, the application may be applied to cases of $(\varepsilon, \delta)$ privacy, too.

Training of a neural network providing $(\varepsilon, \delta)$ privacy or $\varepsilon$ privacy is made such that a random value is added to each of the training data of the training data set before the training data are input into the neural network. The training data are labelled, i.e., the ground truth is indicated.

Summary

It is an object to improve the prior art.

According to a first aspect, there is provided an apparatus, comprising

means for selecting, at random, test data from a test dataset comprising plural test data and training data from a training dataset comprising plural training data, to obtain an input dataset comprising plural input data;

means for inputting the input data of the input dataset into a neural network;

means for determining, for each of the input data of the input dataset, a value of a score function, wherein the larger the value of the score function is, the larger is an absolute value of a difference between a ground truth for the respective input data and an output of the neural network obtained in response to inputting the respective input data into the neural network;

means for sorting the values of the score function into plural non-overlapping bins;

means for calculating, for each of the bins separately for the training data among the input data, a proportion of the training data for which the values of the score function fall in the respective bin relative to the number of the training data among the input data;

means for calculating, for each of the bins separately for the test data among the input data, a proportion of the test data for which the values of the score function fall in the respective bin relative to the number of the test data among the input data;

means for subtracting, for each of the bins, the proportion of the test data from the proportion of the training data to obtain a distance for the respective bin;

means for calculating a total distance by summing the distances for the bins being larger than 0 without summing the distances for the bins being smaller than 0; wherein

the input dataset is a subset of a join of the test dataset and the training dataset and does not comprise the entire training dataset,

according to information available to the apparatus, each of the training data was previously used for training of the neural network;

according to the information available to the apparatus, none of the test data was used for the training of the neural network.

The apparatus may further comprise

means for determining a privacy value for the neural network from the total distance and a precomputed privacy profile; wherein

the privacy value may be indicative of a privacy level provided by the output of the neural network.

The apparatus may further comprise

means for comparing the privacy level with a privacy threshold published by the neural network;

means for instructing to perform an action if the privacy level is less than the privacy threshold.

The action may comprise at least one of:

inhibiting to provide at least one of test data or training data to the neural network;

requesting the neural network to delete at least one of test data or training data previously provided to the neural network;

requesting a retraining of the neural network; or

issuing a warning that the neural network does likely not provide the privacy level published by the neural network.

The apparatus may further comprise at least one of

means for obtaining a loss function based on which the neural network was trained together with means for setting the score function to be equal to the loss function; or

means for arbitrarily setting the score function.

Each of the bins may have a width $h_k^*$ .

The width $h_k$ of the bins may not deviate from the following formula by more than 20% of an optimum width $h_k^*$:

$$h_k^* = \left( \frac{12}{\int p'(x)^2 \, \mathrm{d}x + \int q'(x)^2 \, \mathrm{d}x} \right)^{\frac{1}{3}} k^{-\frac{1}{3}} \quad ,$$

wherein p' and q' denote derivatives of probability density functions *p(x)* of the training dataset and *q(x)* of the test dataset, respectively, x denotes values of the score function, and *k* denotes a total number of the input data.

The width $h_k$ of the bins may not deviate from the following formula by more than 20% of an optimum width $h_k^*$

$$h_k^* = 2 \cdot 3^{\frac{1}{3}} \cdot \pi^{\frac{1}{6}} \cdot \sigma \cdot k^{-\frac{1}{3}},$$

wherein $\sigma$ is a largest one of an estimated standard deviation of the values of the score function for the test data among the input data and an estimated standard deviation of the values of the score function for the training data among the input data.

The proportion of the training data may be calculated as a discrete probability mass function normalized by the number of the training data among the input data.

The proportion of the test data may be calculated as a discrete probability mass function normalized by the number of the test data among the input data.

The apparatus may further comprise

means for weighting, for each of the bins, the distances of the respective bin by a respective weight, wherein the smaller the respective weight is the larger is the value of the score function for the respective bin; wherein the means for calculating is configured to calculate the total distance by summing of the weighted distances for the bins being larger than 0.

For each of the bins, the respective weight may be 1 if the value of the score function for the respective bin is not larger than a score function threshold, and the respective weight may be 0 if the value of the score function for the respective bin is larger than the score function threshold.

The neural network may be a trained neural network.

The apparatus may be configured to participate in federated learning for training of the neural network; and an aggregator of the federated learning may comprise the neural network.

According to a second aspect, there is provided a method, comprising

selecting, at random, test data from a test dataset comprising plural test data and training data from a training dataset comprising plural training data, to obtain an input dataset comprising plural input data;
inputting the input data of the input dataset into a neural network;
determining, for each of the input data of the input dataset, a value of a score function, wherein the larger the value of the score function is, the larger is an absolute value of a difference between a ground truth for the respective input data and an output of the neural network obtained in response to inputting the respective input data into the neural network;
sorting the values of the score function into plural non-overlapping bins;
calculating, for each of the bins separately for the training data among the input data, a proportion of the training data for which the values of the score function fall in the respective bin relative to the number of the training data among the input data;
calculating, for each of the bins separately for the test data among the input data, a proportion of the test data for which the values of the score function fall in the respective bin relative to the number of the test data among the input data;
subtracting, for each of the bins, the proportion of the test data from the proportion of the training data to obtain a distance for the respective bin;
calculating a total distance by summing the distances for the bins being larger than 0 without summing the distances for the bins being smaller than 0; wherein
the input dataset is a subset of a join of the test dataset and the training dataset and does not comprise the entire training dataset,
according to information available to the apparatus, each of the training data was previously used for training of the neural network;
according to the information available to the apparatus, none of the test data was used for the training of the neural network.

The method may further comprise

determining a privacy value for the neural network from the total distance and a precomputed privacy profile; wherein the privacy value may be indicative of a privacy level provided by the output of the neural network.

The method may further comprise

comparing the privacy level with a privacy threshold published by the neural network;
instructing to perform an action if the privacy level is less than the privacy threshold.

The action may comprise at least one of:

inhibiting to provide at least one of test data or training data to the neural network;
requesting the neural network to delete at least one of test data or training data previously provided to the neural network;
requesting a retraining of the neural network; or
issuing a warning that the neural network does likely not provide the privacy level published by the neural network.

The method may further comprise one of

obtaining a loss function based on which the neural network was trained together with setting the score function to be equal to the loss function; or
arbitrarily setting the score function.

Each of the bins may have a width $h_k^*$ .

The width $h_k$ of the bins may not deviate from the following formula by more than 20% of an optimum width $h_k^*$:

$$h_k^* = \left( \frac{12}{\int p'(x)^2 \, \mathrm{d}x + \int q'(x)^2 \, \mathrm{d}x} \right)^{\frac{1}{3}} k^{-\frac{1}{3}},$$

wherein p' and q' denote derivatives of probability density functions $p(x)$ of the training dataset and $q(x)$ of the test dataset, respectively, x denotes values of the score function, and $k$ denotes a total number of the input data.

The width $h_k$ of the bins may not deviate from the following formula by more than 20% of an optimum width $h_k^*$

$$h_k^* = 2 \cdot 3^{\frac{1}{3}} \cdot \pi^{\frac{1}{6}} \cdot \sigma \cdot k^{-\frac{1}{3}},$$

**wherein** $\sigma$ is a largest one of an estimated standard deviation of the values of the score function for the test data among the input data and an estimated standard deviation of the values of the score function for the training data among the input data.

The proportion of the training data may be calculated as a discrete probability mass function normalized by the number of the training data among the input data.

The proportion of the test data may be calculated as a discrete probability mass function normalized by the number of the test data among the input data.

The method may further comprise

weighting, for each of the bins, the distances of the respective bin by a respective weight, wherein the smaller the respective weight is the larger is the value of the score function for the respective bin; wherein
the total distance may be calculated by summing of the weighted distances for the bins being larger than 0.

For each of the bins, the respective weight may be 1 if the value of the score function for the respective bin is not larger than a score function threshold, and the respective weight may be 0 if the value of the score function for the respective bin is larger than the score function threshold.

The neural network may be a trained neural network.

An apparatus performing the method may be configured to participate in federated learning for training of the neural network; and an aggregator of the federated learning may comprise the neural network.

According to a third aspect, there is provided a computer program product comprising a set of instructions which, when executed on an apparatus, is configured to cause the apparatus to carry out the method according to the second aspect. The computer program product may be embodied as a computer-readable medium or directly loadable into a computer.

According to some example embodiments, at least one of the following advantages may be achieved:

- Privacy violation by a neural network may be detected;
- The auditor need not know any details of the neural network.

Brief description of the drawings

Further details, features, objects, and advantages are apparent from the following detailed description of the preferred example embodiments which is to be taken in conjunction with the appended drawings, wherein:

Fig. 1 shows a privacy profile;
Fig. 2 shows a message flow according to some example embodiments;
Fig. 3 compares a TV distance calculated by an example embodiment using an optimum bin width with a corresponding exact TV distance for different privacy levels;
Fig. 4 compares a TV distance calculated by an example embodiment using too few bins with a corresponding exact TV distance for different privacy levels;
Fig. 5 compares a TV distance calculated by an example embodiment using too many bins with a corresponding exact TV distance for different privacy levels;
Fig. 6 compares simulation results of $\varepsilon$ calculated according to example embodiments with a baseline scenario;
Fig. 7 compares simulation results of $\varepsilon$ calculated according to example embodiments with a baseline scenario;
Fig. 8 compares simulation results of $\varepsilon$ calculated according to example embodiments with a baseline scenario;
Fig. 9 compares simulation results of $\varepsilon$ calculated according to example embodiments with a baseline scenario;
Fig. 10 shows an apparatus according to an example embodiment;
Fig. 11 shows a method according to an example embodiment; and
Fig. 12 shows an apparatus according to an example embodiment.

**Detailed** description of certain example embodiments

Herein below, certain example embodiments are described in detail with reference to the accompanying drawings, wherein the features of the example embodiments can be freely combined with each other unless otherwise described. However, it is to be expressly understood that the description of certain example embodiments is given by way of example only, and that it is by no way intended to be understood as limiting the disclosure to the disclosed details.

Moreover, it is to be understood that the apparatus is configured to perform the corresponding method, although in some cases only the apparatus or only the method are described.

Preserving privacy may be required in inference. For example, a trained AI model may provide some privacy guarantees in terms of Differential privacy, $(\varepsilon,\delta)$-DP. The model may be used by some AF or NF for inference.

As another example, preserving privacy may be required in federated learning to train a neural network. Federated learning is a machine learning technique that trains an AI/ML model across multiple decentralized edge nodes (e.g., UEs, gNBs) each performing local model training using local data samples. The technique does not require exchange of local data samples. FL is a form of machine learning where, instead of model training at a single node, different versions of the model are trained at the different distributed hosts (FL clients). After training a local model, each individual learner transfers its local model parameters, instead of the (raw) training dataset, to an aggregating unit. The aggregating unit utilizes the local model parameters to update a global model which may eventually be fed back to the local learners for further iterations until the global model converges. As a result, each local learner benefits from the datasets of the other local learners only through the global model, shared by the aggregator, without explicitly accessing the high volume of (potentially privacy-sensitive) data available at each of the other local learners.

In such an example, a network entity is coordinating a federated learning scenario with differential privacy, which has multiple participants (UEs). Each UE perturbs locally their own data with an agreed noise variance.

Privacy auditing provides methods for an auditor (e.g. a third-party auditor, but also a participant of federated learning, for example) to check if an entity who is collecting data actually applies the advertised privacy over the dataset or its functions. In the 3GPP terminology, this network entity could be ADRF or NWDAF, for example, that is envisioned to collect and process data with AI/ML functionalities.

For example, in the above described example inference scenario, the AI model may be trained by an entity (AF/NF) in a blackbox fashion with some published privacy guarantees in terms of Differential privacy, $(\varepsilon,\delta)$-DP. However, the Network entity hosting the AI model, e.g. NWDAF, is only willing to share the outputs of the trained AI model but not the model itself, e.g. due to technology confidentiality. The problem is, how to estimate the amount of privacy perturbations that are applied to the training dataset by this network entity, just by observing the output of the AI model?

In the above described example federated learning scenario, if some UEs collude and add less noise to their own data during the FL, or if the FL server promises but fails to add noise to the aggregate sums, then a specific UE's data privacy may be compromised. How can a UE observe the aggregate sums coming from the server, and estimate the total noise variance/ privacy applied to the sum by the other UEs and/or the server?

There is a clear incentive for the data processor unit (e.g. NWDAF) hosting the NN to promise high levels of privacy while only implementing a small/weak privacy enhancing algorithm or even no privacy enhancing algorithm. In addition to the higher data utility if the data are less disturbed by added noise for privacy, there could be also less pre-processing time (in case the privacy enhancing technique is completely omitted).

Some example embodiments are applicable to different privacy enhancing mechanism (algorithm). One example of a privacy enhancing mechanism is differentially private stochastic gradient descent (DP-SGD). Other examples include an exponential mechanism, a Laplace mechanism, Randomized Response, etc.

Some example embodiments estimate the privacy level (in the DP sense) provided by a function collecting data to train a NN. Typically, such a function announces that it provides a certain level of privacy. In a 3GPP network, the function may be an NF/AF, e.g., NWDAF or ADRF. However, the function is not limited to a 3GPP NF but may be any third party, that is tasked to provide privacy on the input data during training of the NN.

Some example embodiments provide at least one of the following features:

1) It assumes only blackbox access to the model
2) It estimates the privacy while the training progresses
3) It estimates the privacy level (\epsilon in DP sense)
4) The method (apparatus) may be agnostic to the underlying DP mechanism
5) The method (apparatus) does not make any assumptions on the prior data distribution
6) The method is based on Total Variation Distance.

Some example embodiments are described in greater detail below.

In an example embodiment, an external (or trusted internal) entity (denoted as Privacy Auditing Network Functions, PANF, for example) is investigating the privacy guarantees which are promised by the data processing unit (e.g. NWDAF). Due to industrial secrecy, the NWDAF does not share the access to the processed data. Only the output of the function will be accessible.

For instance, consider that NWDAF has trained a Network Anomaly detection algorithm based on the UEs' private data and using AI (e.g., Autoencoders). The PANF has only access to the outputs of NWDAF's AI model, that is, basically, access to the inference on the particular event. For example, the output may indicate whether the event is a normal event or an anomaly. NWDAF promises $(\varepsilon, \delta)$ -DP on the outputs of any query. PANF audits NWDAF to check if NWDAF keeps this promise.

PANF (the "auditor") gets as an input a training dataset and a test dataset. The training dataset and the test dataset are labeled, i.e., they comprise for each data an indication of a respective ground truth. PANF knows that NWDAF was trained by the training data of the training dataset. For example, PANF may get this information from UEs or NFs that trained NWDAF. Furthermore, at least according to the knowledge of the PANF, NWDAF was not trained with any of the test data of the test dataset.

PANF forms an input dataset from the training dataset and the test dataset by random selection. The input dataset is a subset of a join of the training dataset and the test dataset. The input dataset comprises training data and test data but does not comprise the entire training dataset. More precisely, in some example embodiments, PANF may perform the following actions to generate the input dataset:

**Shuffle the test & training data, at random**

**Sample with Replacement:** take a sample randomly and uniformly with replacement for training dataset:

$x_{train} \sim A_{train} \subset D/X$ and

$x_{test} \sim A_{test} \subset X$

Here, "~" means "sampled from", D denotes the entire dataset (i.e., the join of the test dataset X and the training dataset D/X (= the entire dataset - test dataset). $A_{train}$ denotes the set of training data among the input data (the dataset for auditing), and $A_{test}$ denotes the set of test data among the input data.

PANF inputs the input data of the input dataset into the NN and obtains the respective output. Since the input data are labeled (the input data are either test data or training data, and these are labeled), PANF knows the ground truth and may compare the output of the NN with the ground truth to calculate a value of a score function. For example, the score function may be the absolute value or a square of a difference between the output and the ground truth, but other score functions are feasible, too. If PANF knows the loss function applied when the NN was trained, PANF may apply this loss function as the score function, but PANF may apply an arbitrary score function instead. Functionally, the score function is a member of a family of loss functions that may be used in training of a neural network. The value of these loss functions increases if the absolute value of the difference between the output and the ground truth increases. In other words, the larger the value of the score function is, the larger is the absolute value of the difference between the ground truth for the respective input data and the output of the neural network obtained in response to inputting the respective input data into the neural network.

Typically, but not necessarily, the value of the score function is 0 if the ground truth for the respective input data is equal to the output of the neural network obtained in response to inputting the respective input data into the neural network. Typically, but not necessarily, the values of the score function are not negative ($\geq 0$).

In detail, in some example embodiments, PANF may perform

---

**Blackbox Inquiry of Score function / from NF:**

$$I(F(\theta, x), y)$$

---

Here, $F(\Theta, x)$ denotes the output of the NN based on the input data x, y denotes the ground truth for the input data x, and $\Theta$ denotes the parameters (in particular: the weights) of the neural network. Note that PANF need not to know $\Theta$ but only knows $F(\Theta, x)$ and y.

The obtained values of the score function are distributed in bins. The bins are not overlapping and typically do not have a gap in between. The width $\Delta l$ of the bins may be constant or vary with the value of the score function. Thus, PANF computes a discrete distribution S of the values of the score function:

---

**Compute the distribution S of the values of the Score function as:**

$$S(\cdot) := I(F(\theta, x), y)$$

---

The distribution S indicates for each of the bins the number of values of the score function $I(F(\theta, x), y)$ that are in the respective bin.

Based on the distribution, PANF computes, separately for the test data among the input dataset and the training data among the input dataset, an empirical probability that a value of the score function is in the respective bin. The probability may be derived by a histogram of the values of the score function (the discrete distribution S). For the test data, this probability is normalized by the number of the test data among the input data. For the training data, this probability is normalized by the number of the training data among the input data. The probability may be expressed as a probability mass function.

In detail, in some example embodiments, PANF may perform

---

**Compute the discrete pmf:**

$$p_k := \frac{\#\{x \in A_{train} : S(\theta, x) = k\}}{|A_{train}|}$$

$$q_k := \frac{\#\{x \in A_{test} : S(\theta, x) = k\}}{|A_{test}|}$$

---

For each of the bins, PANF computes a distance. The distance indicates a difference of the computed probability for the training data and the probability for the test data (i.e., between $p_k$ and $q_k$: $p_k - q_k$. If the NN perfectly preserves privacy, one would expect that the distance is 0 or close to 0 for all bins because the quality of the output is equal for training data (which were previously known to the NN due to the previous training) and test data (which were previously not known to the NN). If this distance is positive, it means (for small values of the score function), that the NN estimates the ground truth for the training data better than for the test data. This finding is a hint that privacy may be violated. On the other hand, if the distance is negative, it means that the NN estimates the ground truth for the test data better than for the training data. Since the NN did not use the test data for its training, a negative distance (or a distance equal to 0) is at least not an indication that privacy is corrupted.

For a statistical evaluation, PANF sums the distances obtained for the bins. More in detail, PANF sums only the positive distances $p_k - q_k$ (which might indicate a breach of privacy) but does not sum the negative distances $p_k - q_k$. The

result of summing may be called discrete total variation distance TV (P, Q), where P and Q denote the subset of the training dataset contained in the input dataset and the subset of the test dataset or the entire test dataset contained in the input dataset.

In detail, in some example embodiments, PANF may perform

---

**Compute the Discrete Total Variation distance:**
$$TV(P, Q) := \sum_{k \in Z} \{ maxp_k\text{-}q_k, 0 \}$$

---

In some example embodiments, the summing up may be performed only for distances of the bins for values of the score function being smaller than a threshold (score function threshold) because the statistics for large values of the score function may be irrelevant to determine the privacy level. For the same reason, in some example embodiments, the distances may be weighted before being summed to the total variation distance. The weights may be monotonically decreasing with increasing value of the score function for the respective bin. The above example embodiments employing the score function threshold may be considered as applying a weight of 1 for bins for values of the score function being not larger than the score function threshold, and a weight of 0 for bins for values of the score function being larger than the score function threshold. A value of the score function representing a certain bin may be, for example, the lower limit of the bin, the middle of the bin, or the upper limit of the bin.

In some example embodiments, the score function threshold may be predefined. In some example embodiments, the score function threshold may be determined on the fly. I.e., one may start summing the distances for bins for small values of the score function and add the distances for bins with larger values of the score function successively, finishing the summing according to some heuristics.

Finally, as an option, PANF derives a value of $\varepsilon$ (or a pair ($\varepsilon, \delta$) from the obtained value of total variation distance. For this purpose, PANF may use a privacy profile that maps the TV with a pair of ($\varepsilon, \delta$). This information may slightly depend on the privacy enhancing mechanism type, e.g. Gaussian, Laplace, Randomized Response,.... Hence, PANF has to assume the privacy enhancing mechanism type used by the neural network. However, since the variations depending on the privacy enhancing mechanism type are not large, any of them may be selected if the actual privacy enhancing mechanism of the neural network is not known.

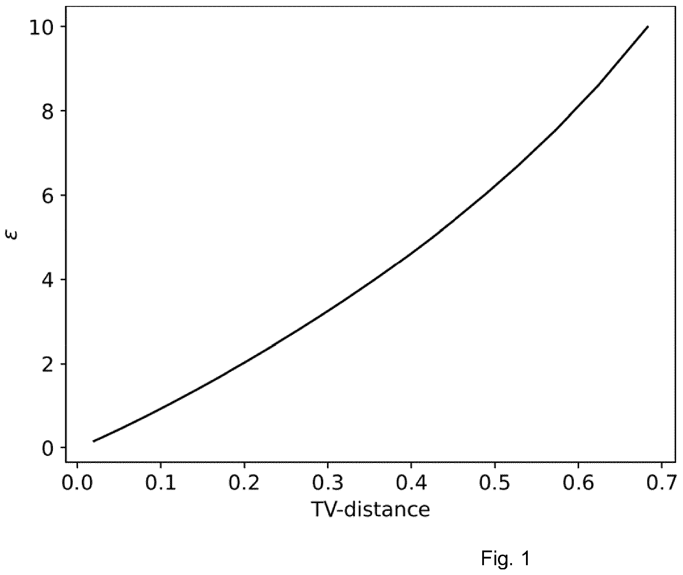

In some example embodiments, PANF may calculate the pair of ($\varepsilon, \delta$) based on the total variation distance. In some example embodiments, the privacy profile may be precomputed (typically offline, one time only) and provided to PANF as a lookup-table. Fig. 1 shows a numerical plot of a privacy profile for a Gaussian mechanism $\varepsilon = \mu(TV(P,Q))$ for a fixed $\delta = 10^{-5}$. The larger the total variation distance is, the larger is $\varepsilon$ and the lower is the privacy level (i.e., the higher is the risk that privacy may not be preserved).

In some example embodiments, the obtained value of $\varepsilon$ is compared with the value of $\varepsilon$ promised by the NN (or promised for the NN) or with some privacy requirement, e.g. of a function providing data to the NN. If the privacy level is lower than some privacy threshold (i.e., if the obtained value of $\varepsilon$ is too large), the auditor may cause that some actions are performed. For example, the actions may comprise one or more of the following: inhibiting to provide at least one of test data or training data to the neural network; requesting the neural network to delete at least one of test data or training data previously provided to the neural network; requesting a retraining of the neural network; or issuing a warning that the neural network does likely not provide the privacy level published by the neural network.

In some example embodiments, PANF may compare the total variation distance with a required total variation distance instead of comparing the obtained $\varepsilon$ with a required $\varepsilon$. In such example embodiments, PANF need not to derive $\varepsilon$ from the total variation distance. Based on this comparison, PANF may cause similar actions as described above.

Next, an example embodiment is described at greater detail, where the above method is applied to federated learning. The explanations provided above apply to this scenario correspondingly but the following may be additionally taken into account:

Consider a setting where a UE is involved in an AI/ML federated learning training with some other UEs (or any other function participating in the FL) and the Aggregator (NWDAF, gNB, ...). A highly adopted approach in industry is DP-SGD, where a UE adds some Gaussian noise locally (local DP), to the gradient updates to prevent any privacy data leakage. This method, however, is prone to very low utility-privacy trade off. In other words, the amount of noise needed to protect the UEs privacy based on the DP analysis is too high such that the noise-added data are not useful for their purpose.

One remedy here is to have a trusted zone in the aggregator. The UEs provide their local models and gradients without adding any noise thereto. The aggregator adds noise to the pooled data (Global Privacy). Based on the DP computations, the amount of needed noise is decreasing with the number of UEs increasing. However, this solution requires trust in the aggregator.

A hybrid solution is to split the amount of required noise between UE and the aggregator. Thus, the UE may add only little noise, such that the noise-added data are still useful for their purpose, but the noise is less than that according to a fully local privacy scheme. The aggregator adds the "missing noise" to the pooled data.

Two scenarios might arise here that can threaten a UE's privacy:

1) The aggregator does not add enough noise (smaller than promised noise variance)
2) The other UEs either dropout (smaller dataset pool = higher needed noise) or add no noise to their data

In the last two approaches (the Global and the Hybrid privacy schemes), a UE (or any other party) might be interested to audit the aggregator or the other UEs for privacy promises that they have made.

To audit both scenarios, in some example embodiments, a UE may use the following algorithm to constantly follow an estimate $\varepsilon$ during the training. If the UE detects that $\varepsilon$ becomes too large (i.e., the privacy level is too low), the UE can decide to abort the training, thus avoiding further data exposure during the federated learning training. The meaning of the variables is the same as in the above scenario.

| Input: | Test dataset $\in$ **X** and Training dataset $\in$ **D/X** |
|---|---|
| **1** | **At the UE (before each round of FL update do)** |
| **2** | **Sample:** for batch DP-SGD, one uses the data without replacement, while for the auditing test data the sampling is **with** replacement<br>$x_{train} \sim A_{train} \subset D/X \rightarrow$ *no replacement*<br>$x_{test} \sim A_{test} \subset X \rightarrow$ with replacement |
| **3** | **Run inference on the model's Score function $l$ at $n^{th}$ round:**<br>$$l^n(F(\theta, x), y)$$ |
| **4** | **Compute the discrete distribution S of the Score function as:**<br>$S^n(\theta, x) = l^n(F(\theta, x), y)$ |
| **5** | **Compute the discrete pmf:**<br>$$p_k := \frac{\#\{x \in A_{train} : S^n(\theta, x) = k\}}{|A_{train}|}$$<br>$$q_k := \frac{\#\{x \in A_{test} : S^n(\theta, x) = k\}}{|A_{test}|}$$ |
| **6** | **Compute the Total Variation distance:**<br>$TV^n(P, Q) := \Sigma_{k \in Z} max\{p_k - q_k, 0\}$ |
| **7** | **Estimate $\varepsilon$ at round n by using precomputed $\mu(.)$**<br>$\varepsilon^n = \mu(TV^n(\boldsymbol{P}, \boldsymbol{Q}))$ |
| **8** | **If $\varepsilon^n$ deviate too much from the promised $\varepsilon$, drop the FL training** |

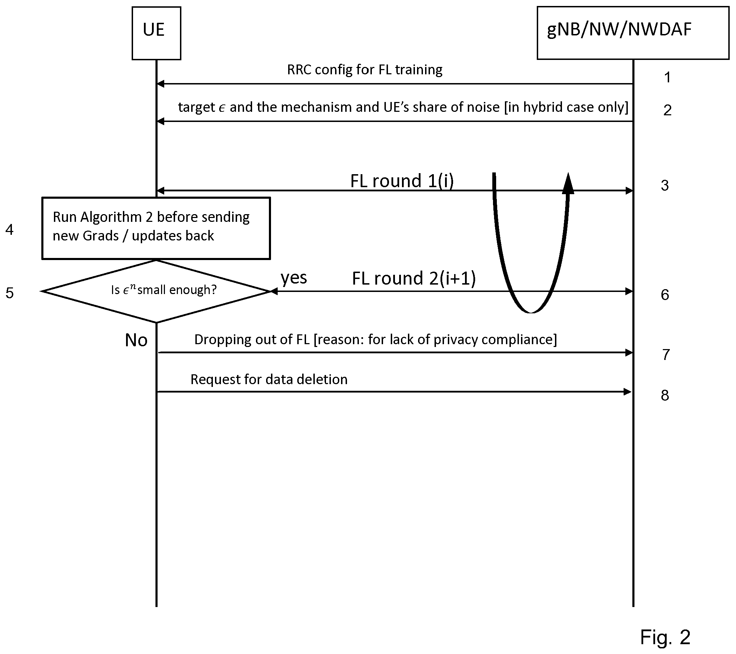

Fig. 2 shows a message sequence chart according to some example embodiments. In Fig. 2, gNB/NW/NWDAF represents an aggregator of the FL, and UE represents a participant of the FL, for example. The actions are as follows:

1: The aggregator configures the UE for FL learning.
2: The aggregator also indicates to the UE the promised value of $\varepsilon$. In case of the hybrid solution, it also indicates to the UE the share of noise the UE should apply to the models and gradients.
3: A first ($i^{th}$) round of FL is performed.
4: After the first ($i^{th}$) round is finished, UE runs the above algorithm. In some example embodiments, UE may run the algorithm after every $n^{th}$ round where n≥1. From the algorithm, UE obtains a value of $\varepsilon$.
5: UE compares the obtained value of $\varepsilon$ with that promised by the aggregator.
6: If the obtained value of $\varepsilon$ indicates that the promised privacy is preserved ($\varepsilon$ is sufficiently small), UE continues with FL and provides data to the aggregator.
7: If the obtained value of $\varepsilon$ indicates that the promised privacy is not preserved ($\varepsilon$ is not sufficiently small), UE finishes FL and gives a corresponding indication to the aggregator.
8: In addition, as an option, in some example embodiments, UE may request to delete the data at the aggregator provided previously by the UE.

Preferably, an optimal width of the bins should be selected. The bin width may be:

$$h_k^* = \left( \frac{12}{\int p'(x)^2 \, \mathrm{d}x + \int q'(x)^2 \, \mathrm{d}x} \right)^{\frac{1}{3}} k^{-\frac{1}{3}}$$

p' and q' denote derivatives of probability density functions *p(x)* of the training dataset and *q(x)* of the test dataset, respectively, x denotes values of the score function, and *k* denotes a total number of the input data.

Based on above a good approximation of the optimal bin width for the one-dimensional Gaussian case is

$$h_k^* = 2 \cdot 3^{1/3} \pi^{1/6} \sigma k^{-1/3}$$

where k is the number of samples and $\sigma$ is a largest one of an estimated standard deviation of the values of the score function for the test data among the input data and an estimated standard deviation of the values of the score function for the training data among the input data. If these two standard deviations are equal, any of them may be used.

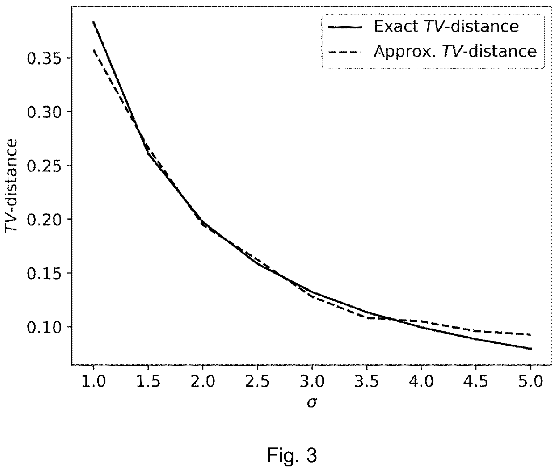

Figs. 3 to 5 show simulation results of TV for different bin width. In Fig. 3, the bin width is the optimum bin width as calculated according to the formula $h_k^* = 2 \cdot 3^{1/3} \pi^{1/6} \sigma k^{-1/3}$. Exact TV-distance TV(P,Q) and the approximated TV-distance obtained using the above method according to an example embodiment are shown. The number of samples k = 5000 and the dimension of the data d = 1000. Thus, the number of bins is 29. The parameter $\sigma$ that determines the privacy level is varied. $\sigma$ is proportional to 1/ε and indicates a standard deviation of the noise added to the data for preserving privacy. More in detail, the following relationship may apply: $\sigma^2 = \frac{2\ln(1.25/\delta) \cdot (\Delta f)^2}{\varepsilon^2}$, wherein $\delta$ is a probability of failure and is, in practice, fixed by 1/N.

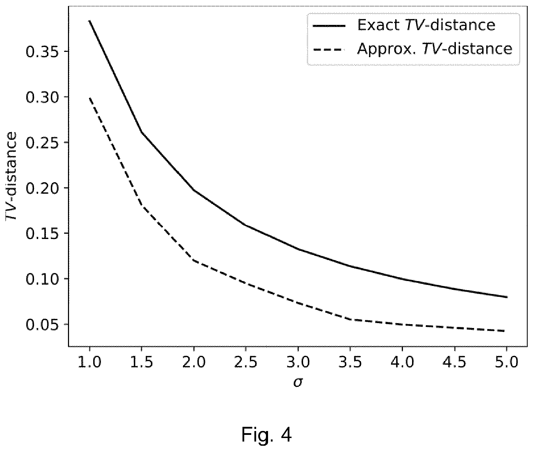

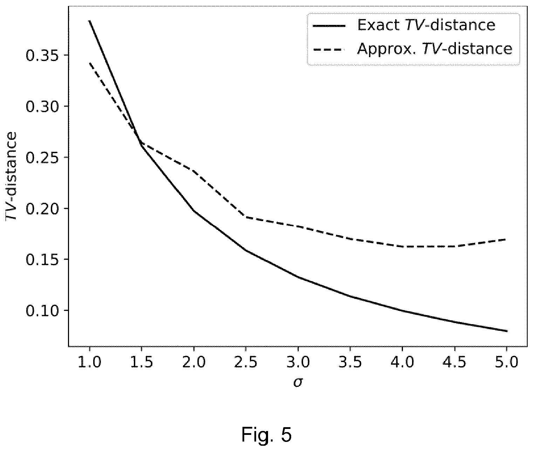

Figs. 4 and 5 show the same simulation where the width of bins is set different from the optimum value. In Fig. 4, the number of bins is just 5 (not enough bins), in Fig. 5, the number of bins is 500 (too many bins).

As may be seen from a comparison of Fig. 3 with Figs. 4 and 5, the estimated TV distance may differ from the exact TV distance if the bin width is not appropriately set. It is sufficient if the bin width deviates not more than 20% of $h_k^*$ from the optimal bin width, preferably not more than 10%.

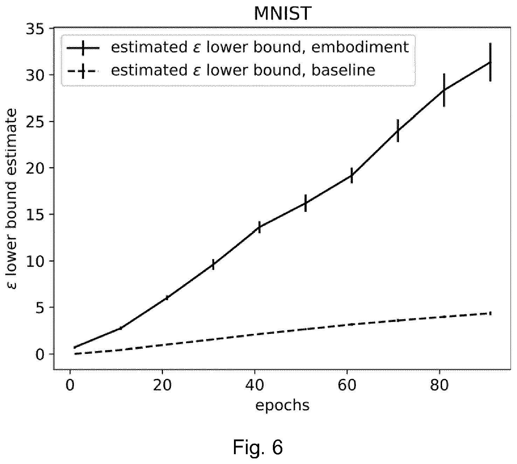

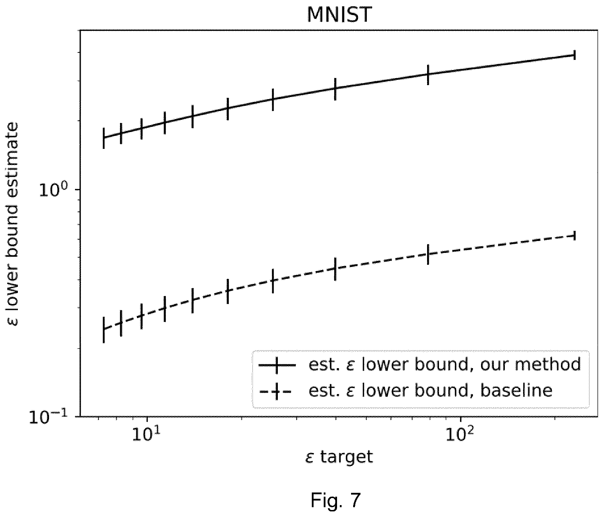

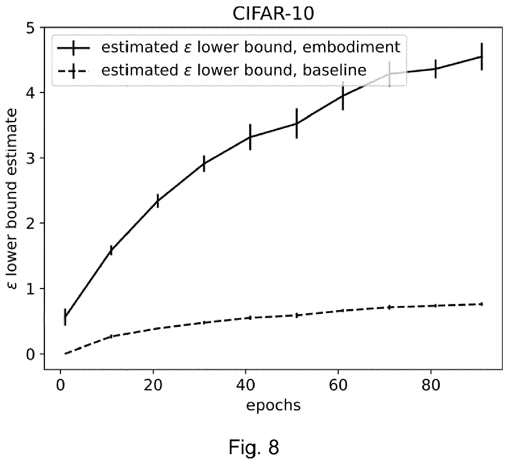

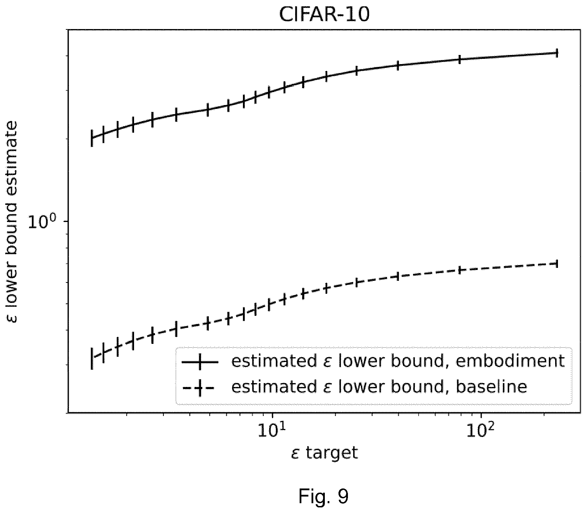

Figs. 6 to 9 show simulation results, whereof Figs. 6 and 7 are based on MNIST dataset, and Figs. 8 and 9 are based on CIFAR-10 dataset.

Figs. 6 and 7 show results of training a simple single hidden-layer feedforward network for MNIST, when the total number of samples is 2000 (half to auditing training, half to auditing testing set).

Fig 6: the growth of ε-estimates along training, when no DP is used, i.e. the model is trained using SGD. In this case, ε should be infinitely large ($\sigma$ = 0). As may be seen from a comparison of the embodiment with the baseline auditing method of [Steinke, T., Nasr, M., and Jagielski, M. (2023). Privacy auditing with one (1) training run. Advances in Neural Information Processing Systems, 36], ε grows much stronger with an increasing number of training epochs than the baseline auditing method.

Fig 7: the ε-estimates after 100 epochs of training, for different values of σ (σ ∈ {0.4, 0.6,...,2.2}, corresponding to ε ∈ {7.28, 8.28, 9.6, 11.4, 14.0, 18.08, 25.2, 39.88, 78.65, 230.9} with δ = 10[-5]). Results are averaged over 10 trials and the error bars on both sides of the mean values depict 1.96 times the standard error, giving the asymptotic 95% coverage. The above indicated theoretical values of ε are upper bounds for the respective estimation. As may be seen from Fig. 7, the estimated values of the embodiment are closer to the actual values than those of the auditing baseline method.

Figs. 8 and 9 correspond to Figs. 6 and 7, respectively, but for a different dataset (CIFAR-10) and the following training: Fine-tuning the last layer of a pre-trained Resnet-20 for CIFAR-10, when the total number of samples is 2000 (half to auditing training, half to auditing testing set).

Fig 8: the growth of ε-estimates along training, when no DP is used, i.e. the model is trained using SGD.

Fig 9: the ε-estimates after 100 epochs of training, for different values of σ (σ ∈ {0.4, 0.6,...,2.2}, corresponding to ε ∈ {1.36, 1.55, 1.8, 2.15, 2.65, 3.44, 4.88, 6.15, 7.28, 8.28, 9.6, 11.4, 14.0, 18.08, 25.2, 39.88, 78.65, 230.9} with δ = 10[-5]). Results are averaged over 10 trials and the error bars on both sides of the mean values depict 1.96 times the standard error, giving the asymptotic 95% coverage.

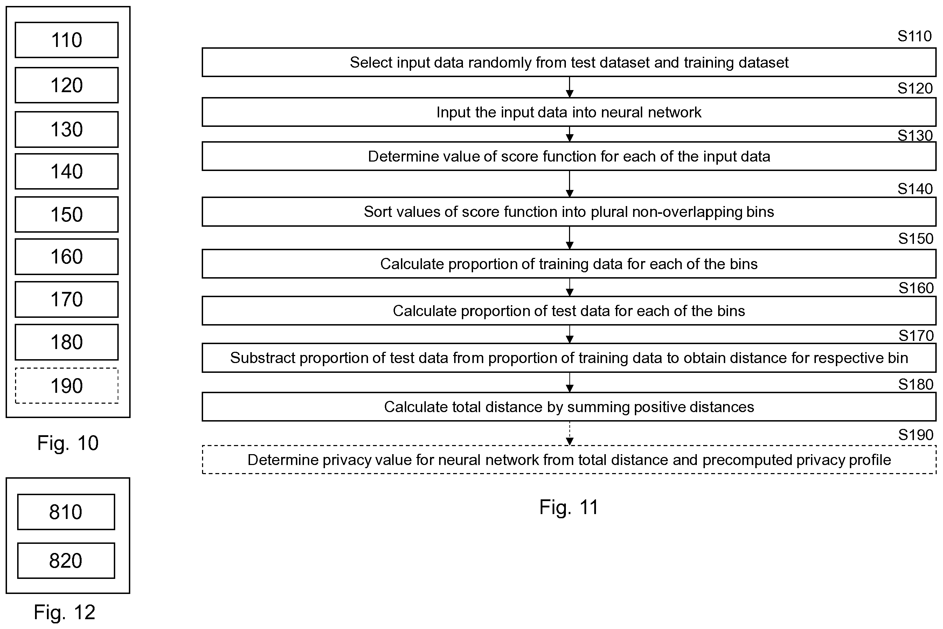

Fig. 10 shows an apparatus according to an example embodiment. The apparatus may be an auditor (such as a UE) or an element thereof. Fig. 11 shows a method according to an example embodiment. The apparatus according to Fig. 10 may perform the method of Fig. 11 but is not limited to this method. The method of Fig. 11 may be performed by the apparatus of Fig. 10 but is not limited to being performed by this apparatus.

The apparatus comprises means for selecting 110, means for inputting 120, first means for determining 130, means for sorting 140, first means for calculating 150, second means for calculating 160, means for subtracting 170, and third means for calculating 180. The means for selecting 110, means for inputting 120, first means for determining 130, means for sorting 140, first means for calculating 150, second means for calculating 160, means for subtracting 170, and third means for calculating 180 may be a selecting means, inputting means, first determining means, sorting means, first calculating means, second calculating means, subtracting means, and third calculating means, respectively. The means for selecting 110, means for inputting 120, first means for determining 130, means for sorting 140, first means for calculating 150, second means for calculating 160, means for subtracting 170, and third means for calculating 180 may be a selector, inputter, first determiner, sorter, first calculator, second calculator, subtractor, and third calculator, respectively. The means for selecting 110, means for inputting 120, first means for determining 130, means for sorting 140, first means for calculating 150, second means for calculating 160, means for subtracting 170, and third means for calculating 180 may be a selecting processor, inputting processor, first determining processor, sorting processor, first calculating processor, second calculating processor, subtracting processor, and third calculating processor, respectively.

Optionally (as indicated by the dashed lines in Figs. 10 and 11), the apparatus may comprise a second means for determining 190. The second means for determining 190 may be a second determining means. The second means for determining 190 may be a second determiner. The second means for determining 190 may be a second determining processor.

The means for selecting 110 selects, at random, test data from a test dataset comprising plural test data and training data from a training dataset comprising plural training data (S110). Thus, the means for selecting 110 obtains an input dataset comprising plural input data. The input dataset is a subset of a join of the test dataset and the training dataset and does not comprise the entire training dataset. According to information available to the apparatus, each of the training data was previously used for training of the neural network. According to the information available to the apparatus, none of the test data was used for the training of the neural network.

The means for inputting 120 inputs the input data of the input dataset into a neural network (S120). The neural network provides a respective output for each of the input data of the input dataset.

For each of the input data of the input dataset, the means for determining 130 determines a value of a score function (S130). The larger the value of the score function is, the larger is an absolute value of a difference between a ground truth for the respective input data and an output of the neural network obtained in response to inputting the respective input data into the neural network. The score function may be arbitrarily chosen among the family of loss functions that may be used for training a neural network, but is preferably the same as the loss function used for training the neural network.

The means for sorting 140 sorts the values of the score function into plural non-overlapping bins (S140).

For each of the bins, the first means for calculating 150 calculates, separately for the training data among the input data, a proportion of the training data for which the values of the score function fall in the respective bin (S150). The proportion is normalized relative to the number of the training data among the input data.

Correspondingly, for each of the bins, the second means for calculating 160 calculates, separately for the test data among the input data, a proportion of the test data for which the values of the score function fall in the respective bin (S160). The proportion is normalized relative to the number of the test data among the input data.

For each of the bins, the means for subtracting 170 subtracts the proportion of the test data from the proportion of the training data (S170). Thus, the means for subtracting 170 obtains a distance for the respective bin.

The third means for calculating 180 calculates a total distance by summing the distances for the bins being larger than 0 without summing the distances for the bins being smaller than 0.

If the apparatus comprises a second means for determining 190, the second means for determining 190 determines a privacy value for the neural network from the total distance and a precomputed privacy profile (S190). The privacy value is indicative of a privacy level provided by the output of the neural network.

Fig. 12 shows an apparatus according to an example embodiment. The apparatus comprises at least one processor 810, at least one memory 820 storing instructions that, when executed by the at least one processor 810, cause the apparatus at least to perform the method according to Fig. 11 and related description.

Some example embodiments are explained with respect to 5G. However, other example embodiments may be employed in other 3GPP generations, such as 4G, 6G, 7G, etc..

One piece of information may be transmitted in one or plural messages from one entity to another entity. Each of these messages may comprise further (different) pieces of information.

Names of network elements, network functions, protocols, and methods are based on current standards, or are current proposals. These names are not limiting. For example, in other versions or other technologies, the names of corresponding entities may be different or the same as in the present description.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be deployed in the cloud.

According to the above description, it should thus be apparent that example embodiments provide, for example, an auditor (such as a UE) or an element thereof (which may or may not be actually integrated in the auditor), an apparatus embodying the same, a method for controlling and/or operating the same, and computer program(s) controlling and/or operating the same as well as mediums carrying such computer program(s) and forming computer program product(s). Thus, embodiments may be implemented as a non-transitory computer readable medium comprising program instructions that, when executed by an apparatus, cause the apparatus to perform one or more processes/methods described herein. (The term "non-transitory," as used herein, is a limitation of the medium itself (i.e., tangible, not a signal) as opposed to a limitation on data storage persistency (e.g., RAM vs. ROM).)

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered the preferred example embodiments. However, it should be noted that the description of the preferred example embodiments is given by way of example only and that various modifications may be made without departing from the scope of the disclosure as defined by the appended claims.

The terms "first X" and "second X" include the options that "first X" is the same as "second X" and that "first X" is different from "second X", unless otherwise specified. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. The term "or" refers to a non-exclusive "or" unless otherwise indicated (e.g., use of "or else" or "or in the alternative").

**Claims**

1. Apparatus configured to participate in federated learning for training of a neural network, the apparatus comprising

   means for selecting (110), at random, test data from a test dataset comprising plural test data and training data from a training dataset comprising plural training data, to obtain an input dataset comprising plural input data;
   means for inputting (120) the input data of the input dataset into the neural network, an aggregator of the federated learning comprising the neural network;
   means for determining (130), for each of the input data of the input dataset, a value of a score function, wherein the larger the value of the score function is, the larger is an absolute value of a difference between a ground truth for the respective input data and an output of the neural network obtained in response to inputting the respective input data into the neural network;
   means for sorting (140) the values of the score function into plural non-overlapping bins;

   means for calculating (150), for each of the bins separately for the training data among the input data, a proportion of the training data for which the values of the score function fall in the respective bin relative to the number of the training data among the input data;
   means for calculating (160), for each of the bins separately for the test data among the input data, a proportion of the test data for which the values of the score function fall in the respective bin relative to the number of the test data among the input data;
   means for subtracting (170), for each of the bins, the proportion of the test data from the proportion of the training data to obtain a distance for the respective bin;
   means for calculating (180) a total distance by summing the distances for the bins being larger than 0 without summing the distances for the bins being smaller than 0; wherein
   the input dataset is a subset of a join of the test dataset and the training dataset and does not comprise the entire training dataset,
   according to information available to the apparatus, each of the training data was previously used for training of the neural network;
   according to the information available to the apparatus, none of the test data was used for the training of the neural network;
   means for determining (190) a privacy value for the neural network from the total distance and a precomputed privacy profile; wherein
   the privacy value is indicative of a $(\varepsilon, \delta)$ differential privacy, DP, privacy level provided by the output of the neural network;

   means for comparing the privacy level with a privacy threshold published by the neural network;

means for instructing to perform an action if the privacy level is less than the privacy threshold; wherein the action comprises at least one of:

inhibiting to provide at least one of test data or training data to the neural network of the aggregator;

requesting the aggregator to delete at least one of test data or training data previously provided to the neural network;

requesting the aggregator a retraining of the neural network; or

issuing a warning to the aggregator that the neural network of the aggregator does likely not provide the privacy level published by the neural network.

2. The apparatus according to claim 1, further comprising
means for obtaining a loss function based on which the neural network was trained together with means for setting the score function to be equal to the loss function.

3. The apparatus according to any of claims 1 or 2, wherein each of the bins has a width $h_k^*$ .

4. The apparatus according to claim 3, wherein the width $h_k$ of the bins does not deviate from the following formula by more than 20% of an optimum width $h_k^*$:

$$h_k^* = \left(\frac{12}{\int p'(x)^2 dx + \int q'(x)^2 dx}\right)^{\frac{1}{3}} k^{-\frac{1}{3}},$$

wherein p' and q' denote derivatives of probability density functions *p(x)* of the training dataset and *q(x)* of the test dataset, respectively, *x* denotes values of the score function, and *k* denotes a total number of the input data.

5. The apparatus according to claim 3, wherein the width $h_k$ of the bins does not deviate from the following formula by more than 20% of an optimum width $h_k^*$

$$h_k^* = 2 \cdot 3^{\frac{1}{3}} \cdot \pi^{\frac{1}{6}} \cdot \sigma \cdot k^{-\frac{1}{3}},$$

wherein $\sigma$ is a largest one of an estimated standard deviation of the values of the score function for the test data among the input data and an estimated standard deviation of the values of the score function for the training data among the input data.

6. The apparatus according to any of claims 1 to 5, wherein at least one of:

the proportion of the training data is calculated as a discrete probability mass function normalized by the number of the training data among the input data; or
the proportion of the test data is calculated as a discrete probability mass function normalized by the number of the test data among the input data.

7. The apparatus according to any of claims 1 to 6, further comprising

means for weighting, for each of the bins, the distances of the respective bin by a respective weight, wherein the smaller the respective weight is the larger is the value of the score function for the respective bin; wherein the means for calculating is configured to calculate the total distance by summing of the weighted distances for the bins being larger than 0.

8. The apparatus according to claim 7, wherein, for each of the bins, the respective weight is 1 if the value of the score function for the respective bin is not larger than a score function threshold, and the respective weight is 0 if the value of the score function for the respective bin is larger than the score function threshold.

9. The apparatus according to any of claims 1 to 8, wherein the neural network is a trained neural network.

10. A computer program product comprising a set of instructions which, when executed on an apparatus, is configured to cause the apparatus to carry out: selecting (S110), at random, test data from a test dataset comprising plural test data and training data from a training dataset comprising plural training data, to obtain an input dataset comprising plural input data;

inputting (S120) the input data of the input dataset into a neural network, an aggregator of federated learning comprising the neural network;

determining (S130), for each of the input data of the input dataset, a value of a score function, wherein the larger the value of the score function is, the larger is an absolute value of a difference between a ground truth for the respective input data and an output of the neural network obtained in response to inputting the respective input data into the neural network;

sorting (S140) the values of the score function into plural non-overlapping bins;

calculating (S150), for each of the bins separately for the training data among the input data, a proportion of the training data for which the values of the score function fall in the respective bin relative to the number of the training data among the input data;

calculating (S160), for each of the bins separately for the test data among the input data, a proportion of the test data for which the values of the score function fall in the respective bin relative to the number of the test data among the input data;

subtracting (S170), for each of the bins, the proportion of the test data from the proportion of the training data to obtain a distance for the respective bin;

calculating (S180) a total distance by summing the distances for the bins being larger than 0 without summing the distances for the bins being smaller than 0; wherein

the input dataset is a subset of a join of the test dataset and the training dataset and does not comprise the entire training dataset,

according to information available to the apparatus, each of the training data was previously used for training of the neural network;

according to the information available to the apparatus, none of the test data was used for the training of the neural network;

determining (S190) a privacy value for the neural network from the total distance and a precomputed privacy profile; wherein

the privacy value is indicative of a $(\varepsilon, \delta)$ differential privacy, DP, privacy level provided by the output of the neural network;

comparing the privacy level with a privacy threshold published by the neural network;

instructing to perform an action if the privacy level is less than the privacy threshold; wherein the action comprises at least one of:

inhibiting to provide at least one of test data or training data to the neural network of the aggregator;

requesting the aggregator to delete at least one of test data or training data previously provided to the neural network;

requesting the aggregator a retraining of the neural network; or

issuing a warning to the aggregator that the neural network of the aggregator does likely not provide the privacy level published by the neural network.

11. A computer-implemented method to participate in federated learning for training of a neural network, the method comprising:

selecting (S110), at random, test data from a test dataset comprising plural test data and training data from a training dataset comprising plural training data, to obtain an input dataset comprising plural input data;

inputting (S120) the input data of the input dataset into the neural network, an aggregator of the federated learning comprising the neural network;

determining (S130), for each of the input data of the input dataset, a value of a score function, wherein the larger the value of the score function is, the larger is an absolute value of a difference between a ground truth for the respective input data and an output of the neural network obtained in response to inputting the respective input data into the neural network;

sorting (S140) the values of the score function into plural non-overlapping bins;

calculating (S150), for each of the bins separately for the training data among the input data, a proportion of the training data for which the values of the score function fall in the respective bin relative to the number of the training data among the input data;

calculating (S160), for each of the bins separately for the test data among the input data, a proportion of the test data for which the values of the score function fall in the respective bin relative to the number of the test data among the input data;

subtracting (S170), for each of the bins, the proportion of the test data from the proportion of the training data to obtain a distance for the respective bin;

calculating (S180) a total distance by summing the distances for the bins being larger than 0 without summing the distances for the bins being smaller than 0; wherein

the input dataset is a subset of a join of the test dataset and the training dataset and does not comprise the entire training dataset,

according to information available to the apparatus, each of the training data was previously used for training of the neural network;

according to the information available to the apparatus, none of the test data was used for the training of the neural network;

determining (S190) a privacy value for the neural network from the total distance and a precomputed privacy profile; wherein

the privacy value is indicative of a $(\varepsilon, \delta)$ differential privacy, DP, privacy level provided by the output of the neural network;

comparing the privacy level with a privacy threshold published by the neural network;

instructing to perform an action if the privacy level is less than the privacy threshold;

wherein the action comprises at least one of:

inhibiting to provide at least one of test data or training data to the neural network of the aggregator;

requesting the aggregator to delete at least one of test data or training data previously provided to the neural network;

requesting the aggregator a retraining of the neural network; or

issuing a warning to the aggregator that the neural network of the aggregator does likely not provide the privacy level published by the neural network.

Fig. 1

UE

gNB/NW/NWDAF

RRC config for FL training    1

target $\epsilon$ and the mechanism and UE's share of noise [in hybrid case only]    2

FL round 1(i)    3

Run Algorithm 2 before sending new Grads / updates back    4

Is $\epsilon^n$ small enough?    5

yes    FL round 2(i+1)    6

No    Dropping out of FL [reason: for lack of privacy compliance]    7

Request for data deletion    8

Fig. 2

Fig. 3

EP 4 654 060 A1

Fig. 4

Fig. 5

Fig. 6

Fig. 7

Fig. 8

CIFAR-10

Fig. 9

```
┌─────────────┐
│  ┌───────┐  │
│  │  110  │  │
│  └───────┘  │
│  ┌───────┐  │
│  │  120  │  │
│  └───────┘  │
│  ┌───────┐  │
│  │  130  │  │
│  └───────┘  │
│  ┌───────┐  │
│  │  140  │  │
│  └───────┘  │
│  ┌───────┐  │
│  │  150  │  │
│  └───────┘  │
│  ┌───────┐  │
│  │  160  │  │
│  └───────┘  │
│  ┌───────┐  │
│  │  170  │  │
│  └───────┘  │
│  ┌───────┐  │
│  │  180  │  │
│  └───────┘  │
│  ┌- - - -┐  │
│  │  190  │  │
│  └- - - -┘  │
└─────────────┘
```

Fig. 10

```
┌─────────────┐
│  ┌───────┐  │
│  │  810  │  │
│  └───────┘  │
│  ┌───────┐  │
│  │  820  │  │
│  └───────┘  │
└─────────────┘
```

Fig. 12

S110
Select input data randomly from test dataset and training dataset

S120
Input the input data into neural network

S130
Determine value of score function for each of the input data

S140
Sort values of score function into plural non-overlapping bins

S150
Calculate proportion of training data for each of the bins

S160
Calculate proportion of test data for each of the bins

S170
Substract proportion of test data from proportion of training data to obtain distance for respective bin

S180
Calculate total distance by summing positive distances

S190
Determine privacy value for neural network from total distance and precomputed privacy profile

Fig. 11

**EUROPEAN SEARCH REPORT**

Europäisches
Patentamt
European
Patent Office
Office européen
des brevets

**Application Number**

EP 25 17 5577

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Kairouz Peter ET AL: "The Composition Theorem for Differential Privacy", arxiv, 6 December 2015 (2015-12-06), pages 1-32, XP093322751, DOI: 10.1109/TIT.2017.2685505 Retrieved from the Internet: URL:https://arxiv.org/pdf/1311.0776 * Section 2 "Differential Privacy as Hypothesis Testing" Section 5 "Applications of the Operational Interpretation to Private Multi-Party Computation" * | 1-11 | INV. G06F21/62 G06N3/045 G06N3/08 |
| A | LIWEI SONG ET AL: "Systematic Evaluation of Privacy Risks of Machine Learning Models", ARXIV.ORG, CORNELL UNIVERSITY LIBRARY, 201 OLIN LIBRARY CORNELL UNIVERSITY ITHACA, NY 14853, 9 December 2020 (2020-12-09), XP081832494, * Section 4.2.1 * | 1-11 | |
| X,P | ANTTI KOSKELA ET AL: "Black Box Differential Privacy Auditing Using Total Variation Distance", ARXIV.ORG, CORNELL UNIVERSITY LIBRARY, 201 OLIN LIBRARY CORNELL UNIVERSITY ITHACA, NY 14853, 5 July 2024 (2024-07-05), XP091809880, * Section 3 Section 4 * | 1,10,11 | **TECHNICAL FIELDS SEARCHED (IPC)** G06F G06N |

-/--

The present search report has been drawn up for all claims

| Place of search | Date of completion of the search | Examiner |
|---|---|---|
| Munich | 7 October 2025 | Frank, Mario |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 25 17 5577

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JOSHUA C ZHAO ET AL: "Federated Learning Privacy: Attacks, Defenses, Applications, and Policy Landscape - A Survey", ARXIV.ORG, CORNELL UNIVERSITY LIBRARY, 201 OLIN LIBRARY CORNELL UNIVERSITY ITHACA, NY 14853, 6 May 2024 (2024-05-06), XP091748811, * Section 7 "Privacy Defenses" * ----- | 1,10,11 | |

TECHNICAL FIELDS
SEARCHED      (IPC)

The present search report has been drawn up for all claims

| Place of search | Date of completion of the search | Examiner |
|---|---|---|
| Munich | 7 October 2025 | Frank, Mario |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **STEINKE, T.** ; **NASR, M.** ; **JAGIELSKI, M.** Privacy auditing with one (1) training run. *Advances in Neural Information Processing Systems*, 2023, vol. 36